Europäisches Patentamt

European Patent Office

Office européen des brevets

(19)

(11) Veröffentlichungsnummer: **0 253 247 B1**

(12) # EUROPÄISCHE PATENTSCHRIFT

(45) Veröffentlichungstag der Patentschrift: **17.04.91**

(51) Int. Cl.[5]: **G02B 27/30**, G01B 11/26

(21) Anmeldenummer: **87109651.7**

(22) Anmeldetag: **04.07.87**

(54) **Fotoelektrisch abgetasteter Kollimator.**

(30) Priorität: **18.07.86 DE 3624253**

(43) Veröffentlichungstag der Anmeldung:
**20.01.88 Patentblatt 88/03**

(45) Bekanntmachung des Hinweises auf die
Patenterteilung:
**17.04.91 Patentblatt 91/16**

(84) Benannte Vertragsstaaten:
**AT BE CH DE FR GB IT LI NL SE**

(56) Entgegenhaltungen:
**DE-A- 3 538 812**

**PATENT ABSTRACTS OF JAPAN, Band 9, Nr.
224 (P-387)[1947], 10. September 1985 & JP-
A-60-82908**

**PATENT ABSTRACTS OF JAPAN, Band 7, Nr.
266 (P-239)[1411], 26. November 1983 & JP-
A-58-146 804**

**SOVIET INVENTIONS ILLUSTRATED, Sektion
Physik, Woche 8621, 6. Juni 1986, Derwent
Publications Ltd., London, GB; & SU - A - 1
187 133 (MOSCOW ELECTR ENG INST)
23.10.1985**

**MESSEN + PRÜFEN, Nr. 6, Juni 1980, Seite
358; Bad Woerishofen; "Ein- und zweiachsige Messwerterfassung mit digitalisiertem
Autokollimator"**

(73) Patentinhaber: **Fried. Krupp Gesellschaft mit
beschränkter Haftung
Altendorfer Strasse 103
W-4300 Essen 1(DE)**

(72) Erfinder: **Mooser, Christian
Im Schlossgarten 4
W-3050 Wunstorf 1(DE)**

Beschreibung

Die Erfindung betrifft einen fotoelektrisch abgetasteten Kollimator der im Oberbegriff des Anspruchs 1 definierten Gattung.

Kollimatoren werden unter anderem zum winkelgerechten, z. B. parallelen oder rechtwinkligen, Ausrichten von verschiedenen Teilen zueinander oder zur Prüfung des Bewegungsablaufs von Schwenkspiegeln und Justierung der Schwenkspiegel verwendet.

Sog. auf dem Markt erhältliche Autokollimatoren weisen ein Autokollimationsfernrohr und mindestens einen Fixspiegel auf, dessen plane Spiegelfläche auf das Autokollimationsfernrohr ausrichtbar ist. Der oder die Fixspiegel werden an den auszurichtenden Teilen vorübergehend befestigt oder von dem Schwenkspiegel selbst gebildet. Eine Lichtquelle im Autokollimationsfernrohr beleuchtet eine Markierung, z. B. eine Strichlinie auf einer Kollimator-Strichplatte, oder generiert eine gegenüber dem Umgebungslicht hellere Markierung ähnlicher Art. Das von der Markierung ausgehende Lichtbündel gelangt über ein Objektiv zum Fixspiegel, wird dort reflektiert und gelangt zurück zum Objektiv, das die Markierung auf einer Okular-Strichplatte abbildet Die Lage der Abbildung zur Teilung der Okular-Strichplatte ist ein Maß für die Ausrichtung der Teile oder für die Stellung der Schwenkspiegelachse.

Bei fotoelektrisch abgetasteten Kollimatoren wird die Okular-Strichplatte durch einen lichtsensitiven Zeilensensor mit nebeneinander angeordneten Fotodetektoren ersetzt, auf welchen die Markierung abgebildet wird. Der mit der Markierung belegte Fotodetektor hat im Idealfall ein von den übrigen Fotodetektoren abweichendes Ausgangssignal. Die Erkennung desjenigen Fotodetektors mit dem abweichenden Ausgangssignal führt zur Erfassung der Ablage der Markierung von der optischen Achse des Autokollimationsfernrohrs.

Als Zeilensensoren können mit Vorteil sog. Charge Coupled Device-(CCD)-Zeilensensoren eingesetzt werden. Bekannte CCD-Zeilensensoren weisen eine Mehrzahl von lichtsensitiven Elementen, beispielsweise Fotodetektoren, und eine gleiche Anzahl von Speicherzellen auf, die jeweils einem Fotodetektor zugeordnet sind. Fotodetektor und Speicherzelle bilden ein sog. Sensorelement. Die Fotodetektoren sind zu einer sog. Fotozeile und die Speicherzellen zu mindestens einem Schieberegister zusammengefaßt. Die Ausgangssignale der Fotodetektoren werden parallel in das Schieberegister eingeschrieben und seriell ausgelesen. Das analoge, zeitliche Ausgangssignal des CCD-Zeilensensors entspricht damit den örtlich nebeneinandergereihten Signalamplituden der einzelnen Fotodetektoren im Moment des Einschreibens in das Schieberegister. Durch die Detektion des Maximums oder Minimums (Signalpeaks) in dem Ausgangssignal des CCD-Zeilensensors läßt sich damit derjenige Fotodetektor feststellen, auf welchem die Markierung abgebildet ist. Die Zeitkomponente des Maximums oder Minimums ist ein Maß für die Abweichung der Markierung von einem vorgegebenen Bezugspunkt. Die Detektion von Maximum bzw. Minimum erfolgt in einfacher Weise mit einer Schwellwertschaltung, in welcher das Ausgangssignal des CCD-Zeilensensors mit einem Schwellwert verglichen wird.

Bei fotoelektrisch abgetasteten Kollimatoren wird der Signalverlauf des CCD-Zeilensensors einerseits von der Lichtstärke der Markierung und andererseits von der Lichtstärke des Hintergrundlichtes bestimmt. Das von dem Hintergrundlicht hervorgerufene Ausgangssignal der Sensorelemente des CCD-Zeilensensors weist starke Exemplarstreuungen auf und ist in starkem Maße von Parametern, wie Temperatur und Belichtungszeit, und von dem Ort des Sensorelements innerhalb des CCD-Zeilensensors abhängig. Als Folge davon ist das die Markierung kennzeichnende Maximum oder Minimum (Signalpeak) im Signalverlauf des CCD-Zeilensensors durch einen Schwellwertvergleich nicht immer eindeutig zu lokalisieren, insbesondere dann, wenn für die Messung nur kurze Belichtungszeiten zur Verfügung stehen.

Der Erfindung liegt die Aufgabe zugrunde, bei einem Kollimator der eingangs genannten Art die Schwellwertschaltung derart zu verbessern, daß auch bei kurzen Belichtungszeiten sich der die Markierung charakterisierende Signalpeak zuverlässig und eindeutig in dem Ausgangssignal des Zeilensensors identifizieren läßt.

Die Aufgabe ist bei einem fotoelektrisch abgetasteten Kollimator der im Oberbegriff des Anspruchs 1 definierten Gattung erfindungsgemäß durch die Merkmale im Kennzeichnungsteil des Anspruchs 1 gelöst.

Bei dem erfindungsgemäßen Kollimator ist die Schwelle der Schwellwertschaltung zur Lokalisierung des Signalpeaks an das durch örtliche Anordnung des Sensorelements innerhalb des Zeilensensors oder durch Exemplarstreuungen der Sensorelemente bedingte unterschiedliche Ausgangssignal der einzelnen Sensorelemente angepaßt Ein von einem Sensorelement ausgegebenes Hintergrundsignal, das im Einzelfall größer bzw. kleiner als der zu detektierende Signalpeak sein kann, führt wegen der entsprechend hohen bzw. niedrigen individuellen Schwelle nicht zu einem Ansprechen der Schwellwertschaltung und damit nicht zu einer Fehldetektion des Signalpeaks. Orts- oder exemplarbedingte Signaländerungen im Ausgangssignal des Zeilensensors werden damit in idealer Weise kompensiert.

Vorteilhafte Ausführungsformen der Erfindung mit zweckmäßigen Weiterbildungen ergeben sich aus den weiteren Ansprüchen 2 bis 5.

Eine vorteilhafte Ausführungsform der Erfindung ergibt sich dabei aus Anspruch 2. Durch das Abspeichern der Schwellwerte für mehrere Parameterwerte oder Parameterwertkombinationen von Belichtungszeit und Temperatur können bei den Kollimatormessungen verwendete unterschiedliche Belichtungszeiten und vorhersagbare Temperaturänderungen berücksichtigt werden.

Eine vorteilhafte Ausführungsform der Erfindung ergibt sich auch aus Anspruch 3, insbesondere in Verbindung mit Anspruch 4 oder 5. Durch diese Maßnahmen läßt sich die erfindungsgemäße Schwellwertschaltung in technisch einfacher Weise mit geringem Schaltungsaufwand realisieren.

Die Erfindung ist anhand eines in der Zeichnung dargestellten Ausführungsbeispiels im folgenden näher beschrieben. Es zeigen

Fig. 1   eine schematische Darstellung eines Längsschnitts eines fotoelektrisch abgetasteten Kollimators,

Fig. 2   eine schematische Darstellung des Ausgangssignals eines CCD-Zeilensensors des Kollimators in Fig. 1,

Fig. 3   ein Blockschaltbild einer Vergleichsschaltung mit CCD-Zeilensensor des Kollimators in Fig.1.

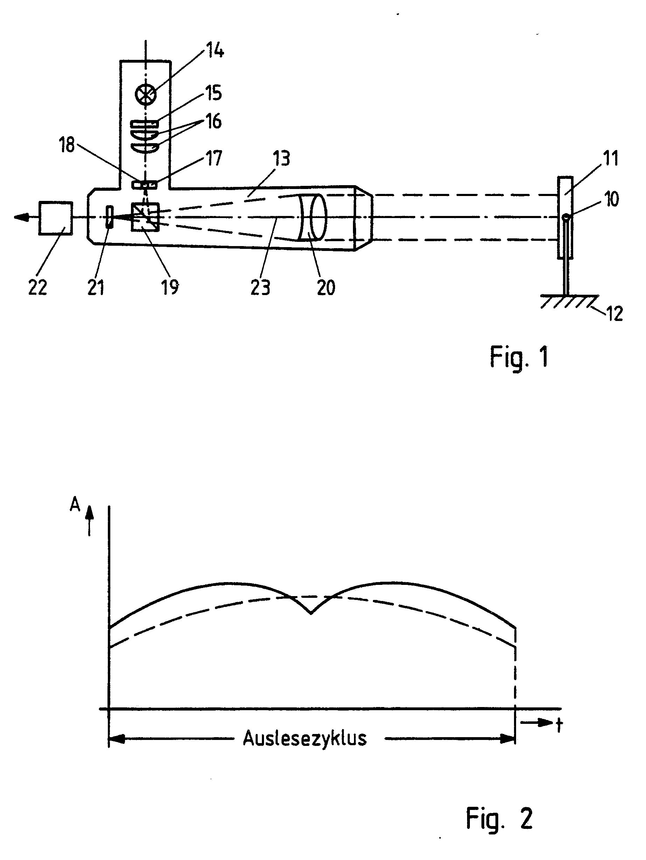

Der in Fig. 1 schematisch dargestellte, fotoelektrisch abgetastete Kollimator dient zur Prüfung der Justierung der Schwenkachse 10 eines Schwenkspiegels 11 in einer mit 12 angedeuteten Vorrichtung Die Vorrichtung 12 wird dabei mit Hilfe eines nicht dargestellten Fixspiegels bezüglich eines Autokollimationsfernrohrs 13 ausgerichtet.

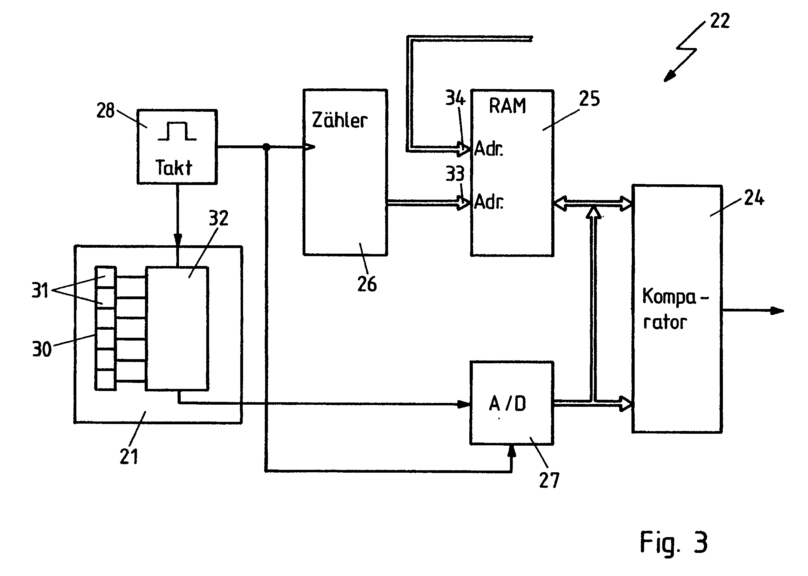

Der Aufbau des Autokollimationsfernrohres 13 ist bekannt und in Fig. 1 lediglich der Vollständigkeit halb er schematisch dargestellt. Eine Lichtquelle 14 beleuchtet über ein Grünfilter 15 und einen Kondensor 16 eine Blende 17, die eine kreisförmige oder strichförmige Öffnung 18 aufweist Das durch die Öffnung 18 fallende Licht erzeugt eine gegenüber dem Umgebungslicht helle Markierung, die über einen Teilerwürfel 19 von einem Objektiv 20 auf den Schwenkspiegel 11 projiziert wird. Das die Markierung bildende Lichtbündel wird von dem Schwenkspiegel 11 in das Objektiv 20 zurückreflektiert und von diesem auf einen CCD-Zeilensensor 21 abgebildet Der prinzipielle Aufbau und die prinzipielle Wirkungsweise eines CCD-Zeilensensors sind eingangs bereits kurz skizziert. Wie in Fig. 3 angedeutet, weist der CCD-Zeilensensor 21 eine Fotozeile 30 aus einer der Auflösung des Kollimators entsprechenden Zahl von Fotodetektoren 31 und ein Schieberegister 32 auf. Jeder Fotodetektor 31 ist mit einer Speicherzelle des Schieberegisters 32 verbunden. Die Ausgangssignale der Fotodetektoren 31 werden parallel in das Schieberegister 32 eingeschrieben. Das Schieberegister 32 wird seriell ausgelesen, wobei mit jedem Taktimpuls die in der letzten Speicherzelle momentan enthaltene Information an den analogen Ausgang des CCD-Zeilensensors 21 gelegt und dort abgenommen wird. Im vorliegenden Beispiel kann ein von der Firma Fairchild unter der Typenbezeichnung CCD 123 angebotener CCD-Zeilensensor verwendet werden. Mittels einer an den CCD-Zeilensensor 21 angeschlossenen Schwellwertschaltung 22 wird die Abbildung der Markierung auf der Fotozeile 30 des CCD-Zeilensensors 21 detektiert. Liegt diese in der Mitte der Fotozeile 30 und damit in der optischen Achse 23 des Autokollimationsfernrohrs 13, so ist der Schwenkspiegel 11 in der Vorrichtung 12 exakt justiert. Eine Abweichung der Markierung von der optischen Achse 23 bedeutet einen entsprechend großen Justierfehler.

Die Schwellwertschaltung 22 weist einen digitalen Komparator 24, einen digitalen Speicher 25, einen sog. RAM, einen als Zähler 26 ausgebildeten Adreßgenerator zur Generierung einer von zwei Ausleseadressen für den Speicher 25 und einen Analog-Digital-Wandler 27 auf. Der eine Eingang des Komparators 24 ist mit dem Datenausgang des Speichers 25 verbunden, während der andere Eingang des Komparators 24 über den A/D-Wandler 27 an dem analogen Ausgang des CCD-Zeilensensors 21 angeschlossen ist. Der CCD-Zeilensensor 21 wird in bekannter Weise von einem Taktgenerator 28 gesteuert, so daß die im Schieberegister 32 abgespeicherten einzelnen Daten der Fotodetektoren 30 seriell am Ausgang des CCD-Zeilensensors 21 erscheinen. Mit dem Takt des Taktgenerators 28 wird gleichzeitig der Zähler 26 weitergezählt und der A/D-Wandler 27 entsprechend verzögert getaktet. Der Zählerstand des Zählers 26 wird kodiert am Ausgang des Zählers 26 ausgegeben und als Adresse dem ersten Adreßeingang 33 des Speichers 25 zugeführt. An einem zweiten Adreßeingang 34 kann jeweils eine Adresse gelegt werden, die einem Parameterwert oder einer Parameterwertkombination der bei der Kollimatormessung momentan vorliegenden Parameter Belichtungszeit und Temperatur entspricht.

In dem Speicher 25 ist eine Vielzahl von Schwellwertkomplexen abgespeichert, von denen jeweils ein Schwellwertkomplex einem Parameterwert oder einer Parameterwertkombination der Parameter Belichtungszeit und Temperatur zugeordnet ist. Der jeweilige Schwellwertkomplex ist über den zweiten Adreßeingang 34 durch eine dem Parameterwert oder der Parameterwertkombination entsprechende Adresse aufrufbar. Jeder Schwellwertkomplex weist eine der Anzahl der Sensorelemente des CCD-Zeilensensors 21 entsprechende Zahl von Schwellwerten auf, von denen jeweils einer einem Sensorelement zugeordnet und an die Größe des Ausgangssignals des betreffenden Sensorelements individuell angepaßt ist. Als Sensorelement wird hier ein mit einer Speicherzelle des Schieberegisters 32 verbundener Fotodetektor 31 der Fotozeile 30 bezeichnet. Innerhalb eines Schwellwertkomplexes läßt sich jeder, einem Sensorelement zugeordneter Schwellwert über den erst en Adreßeingang 33 durch eine vom Zähler 26 generierte Adresse aufrufen, und zwar im Takte der Auslesefrequenz des CCD-Zeilensensors 21, so daß mit jedem, an den Eingang des Komparators 24 gelangenden digitalen Ausgangssignal des CCD-Zeilensensors 21 jeweils die zu diesem Ausgangssignal gehörende individuelle Schwelle an dem Schwellwerteingang des Komparators 24 anliegt.

Die einzelnen abzuspeichernden Schwellwerte für jeden Schwellwertkomplex werden in Kalibriermessungen gewonnen, die mit dem Kollimator, vorzugsweise unmittelbar vor der eigentlichen Messung, durchgeführt werden. Dabei wird das analoge Ausgangssignal des CCD-Zeilensensors 21 digital gewandelt, und aus den einzelnen Digitalwerten werden jeweils individuelle Schwellwerte abgeleitet, die über den Dateneingang in den Speicher 25 unter einer von dem Zähler 26 vorgegebenen ersten Adresse eingeschrieben werden. Diese vorstehend beschriebene Prozedur wird bei einer bestimmten Belichtungszeit und einer bestimmten Temperatur durchgeführt. Die Prozedur wird für verschiedene Parameterwertkombinationen von Temperatur und Belichtungszeit durchgeführt, wobei jeder so gewonnene Komplex von Schwellwerten unter einer zweiten Adresse im Speicher 25 abgelegt wird.

In Fig. 2 ist das analoge Ausgangssignal des CCD-Zeilensensors 21 schematisch dargestellt. Dabei ist angenommen, daß der Schwenkspiegel 11 exakt justiert ist und damit die von der Lichtquelle 14 erzeugte Markierung von dem Objektiv 20 in der optischen Achse 23 und damit in der Mitte der Fotozeile 30 des CCD-Zeilensensors 21 abgebildet wird. Demzufolge weist das Ausgangssignal des mittleren Sensorelements des CCD-Zeilensensors 21 einen sog. Peak auf. Innerhalb eines Auslesezyklus des CCD-Zeilensensors 21 muß damit der Peak in der Mitte des Auslesesignals auftreten. Aufgrund des Umgebungslichtes liefert jeder Fotodetektor 31 eine bestimmte Ausgangsspannung. Diese Ausgangsspannung ist je nach Lage des Fotodetektors 31 sehr unterschiedlich. Im allgemeinen erhalten die randseitigen Fotodetektoren 31 ein stärkeres Umgebungslicht und liefern daher eine kleinere Ausgangsspannung. Die Ausgangsspannung der einzelnen Fotodetektoren 31 ist aber auch in starkem Maße von der Belichtungszeit und von der Temperatur abhängig, so daß die Ausgangssignale der einzelnen Sensorelemente relativ stark schwanken. In dem in Fig. 2 gezeigten Beispiel ist zu erkennen, daß in der Mitte des in einem Auslesezyklus abgenommenen Ausgangssignals des CCD-Zeilensensors 21 ein Peak auftritt, der charakteristisch für die Lage der Markierung ist. Würde die Schwellwertschaltung nur einen einzigen konstanten Schwellwert aufweisen, so würde bei Anlegen dieses Ausgangssignals an die Schwellwertschaltung dieser Peak nicht in der richtigen Zuordnung zu dem mittleren Fotodetektor 31 der Fotozeile 30 erkannt werden, da eine mögliche Schwelle zum Detektieren dieses Peaks bereits zuvor von der Ausgangsspannung unterschritten wird.

Bei der vorstehend beschriebenen Schwellwertschaltung 22 wird der Schwellwert jedoch individuell an das einzelne Sensorelement des CCD-Zeilensensors 21 angepaßt, was in Fig. 2 analog durch die strichlinierte Linie angedeutet ist. Diese individuelle Anpassung berücksichtigt ortsbedingte Änderungen der Ausgangsspannungen der einzelnen Fotodetektoren 31. Die strichlinierte Linie ist in Einzelwerten, vorstehend als Schwellwerte bezeichnet, als ein Schwellwertkomplex in dem Speicher 25 abgespeichert und gilt für eine ganz bestimmte Belichtungszeit und eine ganz bestimmte Temperatur. Mit jedem Takt des Taktgenerators 28 wird von dem analogen Ausgangssignal Fig. 2 am Ausgang des CCD-Zeilensensors 21 ein digitaler Abtastwert an den Eingang des Komparators 24 gelegt. Mit dem gleichen Takt wird aus dem Speicher 25 der diesem Abtastwert zugeordnete digitale Schwellwert gemäß der in Fig. 2 strichlinierten Linie dem Schwellwerteingang des Komparators 24 zugeführt. Mit dem gleichen Takt werden beide Einzelwerte im Komparator 24 verglichen. Auf diese Weise kann ein ortsbedingter-nicht von der Markierung ausgelöster - Abfall der Amplitude des Ausgangssignals des CCD-Zeilensensors 21 nicht zu einem Unterschreiten des individuellen Schwellwertes führen Erst der eigentliche Peak im Ausgangssignal unterschreitet den Schwellwert, und der Komparator 24 gibt ein Detektionssignal aus. Die Zeitkomponente des Detektionssignals ist ein Maß für die Ablage der Markierung von der optischen Achse des Autokollimationsfernrohrs 13 Liegt das Detektionssignal in der Mitte des Auslesezyklus, so wird die Markierung in der optischen Achse 23 des Autokollimationsfernrohrs 13 abgebildet. Eine Abweichung aus der Mitte des Auslesezyklus ist ein Maß für die Abweichung der Markierung von der optischen Achse 23 und ein Maß für den Justierfehler der Schwenkachse 10 des Schwenkspiegels 11.

**Ansprüche**

1. Fotoelektrisch abgetasteter Kollimator (13), der zum Erfassen der Ablage einer projizierten Markierung von einem Bezugspunkt, vorzugsweise von der Kollimatorachse (23), einen lichtsensitiven Zeilensensor (21) mit einer Mehrzahl aneinandergereihter Sensorelemente (31) und eine diesem nachgeschaltete Schwellwertschaltung (22) aufweist, in welcher das Ausgangssignal des Zeilensensors (21) mit mindestens einem Schwellwert verglichen wird, dadurch gekennzeichnet, daß in der Schwellwertschaltung (22) mindestens ein Komplex von Schwellwerten abgespeichert ist, deren Anzahl der Mehrzahl der Sensorelemente (31) entspricht, daß die Schwellwerte jeweils einem Sensorelement (31) zugeordnet und an die Größe des Ausgangssignals des Sensorelements (31) individuell angepaßt sind und daß die abgespeicherten Schwellwerte im Takte der Auslesefrequenz des Zeilensensors (21) zum Vergleich aufrufbar sind.

2. Kollimator nach Anspruch 1, dadurch gekennzeichnet, daß eine Vielzahl von Schwellwertkomplexen abgespeichert sind, von denen jeweils einer einem Parameterwert oder einer Parameterwertkombination der Parameter Belichtungszeit und Temperatur zugeordnet ist.

3. Kollimator nach Anspruch 2, dadurch gekennzeichnet, daß die Schwellwertschaltung (22) einen digitalen Komparator (24), einen digitalen Speicher (25) mit einem Adreßgenerator (26) und einen Analog-Digital-Wandler (27) aufweist, daß der Komparator (24) mit seinem einen Eingang über den Analog-Digital-Wandler (27) an dem analogen Ausgang des Zeilensensors (21) und mit seinem anderen Eingang an dem Ausgang des Speichers (25) angeschlossen ist und daß der Adreßgenerator (26) mit dem Auslesetakt des Zeilensensors (21) synchronisiert ist.

4. Kollimator nach Anspruch 3, dadurch gekennzeichnet, daß der Adreßgenerator als Zähler (26) ausgebildet ist, an dessen Zähleingang die Auslesetaktimpulsfolge des Zeilensensors (21) anliegt und dessen Ausgang mit einem Adreßeingang (33) des Speichers (25) verbunden ist.

5. Kollimator nach Anspruch 3 oder 4, dadurch gekennzeichnet, daß der Speicher (25) als Schreib-Lesespeicher (RAM) mit einem ersten und zweiten Adreßeingang (33, 34) ausgebildet ist und daß an dem ersten Adreßeingang (33) der Adreßgenerator (26) angeschlossen ist und an dem zweiten Adreßeingang (34) eine für die beim Meßvorgang herrschende Parameterwertkombination der Parameter Belichtungszeit und Temperatur charakteristische Adresse anliegt.

**Claims**

1. A photoelectrically scanned collimator (13) which, in order to determine the deviation of a projected marking from a reference point, preferably the collimator axis (23), has a light-sensitive line sensor (21) having a plurality of sensor elements (31) disposed side by side, and a threshold value circuit (22) which is connected to the collimator and in which the output signal of the line sensor (21) is compared with at least one threshold value, characterized in that at least one complex of threshold values whose number corresponds to the plurality of sensor elements (31) is stored in the threshold value circuit (22); each of the threshold values is associated with a sensor element (31) and individually adapted to the value of the output signal of the sensor element (31); and the stored threshold values can be called up for comparison in time with the read-out frequency of the line sensor (21).

2. A collimator according to claim 1, characterized in that a large number of threshold value complexes are stored, each of which is associated with a parameter value or a combination of parameter values of the parameters exposure time and temperature.

3. A collimator according to claim 2, characterized in that the threshold value circuit (22) has a digital comparator (24), a digital store (25) with an address generator (26), and an analog-to-digital transducer (27); the comparator (24) is connected by one of its inputs via the analog-to-digital transducer (27) to the analog output of the line sensor (21) and via its other input to the output of the store (25); and the address generator (26) is synchronized with the read-out timing of the line sensor (21).

4. A collimator according to claim 3, characterized in that the address generator takes the form of a counter (26) to whose counting input the read-out rhythm pulse sequence of the line sensor (21) is applied and whose output is connected to an address input (33) of the store (25).

5. A collimator according to claims 3 or 4, characterized in that the store (25) takes the form of a read-write store (RAM) having a first and second address input (33, 34); the address generator (26) is connected to the first address input (33); and an address characteristic of the combination of parameter values of the parameters exposure time and temperature prevailing during the measuring operation is applied to the second address input (34).

**Revendications**

1. Collimateur (13) exploré par voie photoélectrique, qui, pour la dêtection de l'écart d'une marque projetée par rapport à un point de référence, de préférence par rapport à l'axe (23) du collimateur, possède un détecteur photosensible de lignes (21) comportant une pluralité d'éléments de détection (31) disposés selon une rangée et un circuit à valeur de seuil (22) qui est branché en aval de ce détecteur de lignes (21) et dans lequel le signal de sortie du détecteur de lignes (21) est comparé à au moins une valeur de seuil , caractérisé en ce que, dans le circuit à valeur de seuil (22) est mémorisé au moins un ensemble de valeurs de seuil, dont le nombre correspond au nombre des éléments de détection (31), que les valeurs de seuil sont associées respectivement à un élément de détection (31) et sont adaptées individuellement à l'intensité du signal de sortie de l'élément de détection (31), et que les valeurs de seuil mémorisées peuvent être appelées, pour une comparaison, à la cadence de la fréquence de lecture du détecteur de lignes (21).

2. Collimateur suivant la revendication 1, caractérisé par le fait qu'une multiplicité d'ensembles de valeurs de seuil sont mémorisés, et qu'un ensemble respectif de valeurs de seuil est associé à une valeur ou à une combinaison de valeurs des paramètres : temps d'éclairement et température.

3. Collimateur selon la revendication 2, caractérisé en ce que le circuit à valeur de seuil (22) comporte un comparateur numérique (24), une mémoire numérique (25) possédant un générateur d'adresses (26) et un convertisseur analogique/numérique (27), que le comparateur (24) est raccordé par l'une de ses entrées, au moyen d'un convertisseur analogique/numérique (27), à la sortie analogique du détecteur de lignes (21) et, par son autre entrée, à la sortie de la mémoire (25) et que le générateur d'adresses (26) est synchronisé sur la cadence de lecture du détecteur de lignes (21).

4. Collimateur suivant la revendication 3, caractérisé par le fait que le générateur d'adresses est agencé sous la forme d'un compteur (26), à l'entrée de comptage duquel est appliquée la suite d'impulsions de cadence de lecture du détecteur de lignes (21) et dont la sortie est raccordée à une entrée d'adresses (33) de la mémoire (25).

5. Collimateur suivant la revendication 3 ou 4, caractérisé par le fait que la mémoire (25) est agencée sous la forme d'une mémoire d'enregistement-lecture (RAM) possédant des première et seconde entrées d'adresses (33, 34), que le générateur d'adresses (26) est raccordé à la première entrée d'adresses (33) et qu'à la seconde entrée d'adresses (34) est envoyée une adresse caractéristique de la combinaison, présente lors de l'opération de mesure, des paramètres : temps d'éclairement et température.

Fig. 1

Auslesezyklus

Fig. 2

Fig. 3

EP 0 253 247 B1